# EUROPEAN PATENT APPLICATION

(11) **EP 4 804 450 A1**
(43) Date of publication of application: **09.09.2026**
(21) Application number: 24902482.9
(22) Date of filing: 15.11.2024
(51) Int. Cl.: H04L 5/00, H04W 72/0453

(54) **COMMUNICATION METHOD AND RELATED APPARATUS**

(30) Priority: 13.12.2023 CN 202311713362
(71) Applicant: Huawei Technologies Co., Ltd., Shenzhen, Guangdong 518129 (CN)
(72) Inventor: QU, Huiyang, Shenzhen, Guangdong 518129 (CN); HUANG, Huang, Shenzhen, Guangdong 518129 (CN)
(74) Representative: Huawei European IPR
(86) International application number: PCT/CN2024/132145
(87) International publication number: WO 2025/124059

(57) **Abstract**

Embodiments of this application provide a communication method and a related apparatus, which may be applied to integrated sensing and communication application scenarios such as low-altitude security protection, smart transportation, smart home, social governance, and smart healthcare. In the method, a transmit side indicates a multiplexing relationship between a demodulation reference signal (demodulation reference signal, DMRS) port and a sensing port by using first information, and a first resource element corresponding to the DMRS port and a second resource element corresponding to the sensing port overlap on a frequency domain resource. In addition, second information including a first phase noise tracking reference signal (phase noise tracking reference signal, PTRS) and a sensing signal is sent, and the first PTRS is on an overlapping resource element. In this way, multiplexing of the PTRS and the sensing signal is implemented, that is, a sensing function is satisfied while phase noise estimation of a communication link is implemented.

## Description

This application claims priority to Chinese Patent Application No. 202311713362.0, filed with the China National Intellectual Property Administration on December 13, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Integrated sensing and communication (integrated sensing and communication, ISAC) is widely considered as a key application scenario for next-generation wireless communication, 6G. Simply speaking, a communication requirement is to send some information of a transmit end to a receive end. Simply speaking, sensing requirements include sensing a surrounding environment, a moving speed and a distance of an object, and the like, with conventional radar being the most traditional form of sensing.

Currently, there are two solutions for superimposing communication and sensing. In one solution, communication and sensing respectively occupy different time-frequency resources, to satisfy orthogonality between communication and sensing, that is, there is no interference between communication and sensing. However, a disadvantage of this solution is that the solution wastes spectral efficiency, that is, for conventional communication, it may be considered that some of frequency and time resources of communication are allocated to sensing. In another solution, a sensing signal is directly superimposed on a communication signal, and occupies a same time-frequency resource. An advantage of this solution is that communication efficiency is ensured, that is, the time-frequency resource in communication is not allocated to sensing. A disadvantage is that the signals are non-orthogonally superimposed, which causes severe interference.

How to better satisfy orthogonality between communication and sensing without sacrificing spectral efficiency of communication requires further research.

### SUMMARY

Embodiments of this application provide a communication method and a related apparatus, to better implement orthogonality between communication and sensing without sacrificing spectral efficiency of communication.

According to a first aspect of this application, a communication method is provided. The method may be performed by a communication apparatus. Unless otherwise specified, the "communication apparatus" in this application may be a communication apparatus (for example, a network device or a terminal device), may be a component (for example, a processor, a chip, or a chip system) in a communication apparatus, or may be a logical module or software that can implement all or some functions of a communication apparatus. In the method, first information is sent, where the first information indicates a multiplexing relationship between a demodulation reference signal (demodulation reference signal, DMRS) port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and second information is sent, where the second information includes the DMRS, a first phase noise tracking reference signal PTRS (phase noise tracking reference signal, PTRS), and the sensing signal, and the first PTRS is on an overlapping resource element.

Based on the foregoing technical solution, a transmit side indicates the multiplexing relationship between the DMRS port and the sensing port by using the first information, and the first resource element corresponding to the DMRS port and the second resource element corresponding to the sensing port overlap on the frequency domain resource. In addition, the second information including the first PTRS and the sensing signal is sent, where the first PTRS is on the overlapping resource element. In this way, multiplexing of the PTRS and the sensing signal is implemented, that is, a sensing function is satisfied while phase noise estimation of a communication link is implemented.

The method may be applied to integrated sensing and communication application scenarios such as low-altitude security protection, smart transportation, smart home, social governance, and smart healthcare. The communication apparatus may be used as an information transmit end.

According to a second aspect of this application, a communication method is provided. The method may be performed by a communication apparatus. Unless otherwise specified, the "communication apparatus" in this application may be a communication apparatus (for example, a network device or a terminal device), may be a component (for example, a processor, a chip, or a chip system) in a communication apparatus, or may be a logical module or software that can implement all or some functions of a communication apparatus. In the method, first information is received, where the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; second information is received, where the second information includes the DMRS, a first phase noise tracking reference signal PTRS, and the sensing signal, and the first PTRS is on an overlapping resource element; and the first PTRS signal and the sensing signal are determined based on the first information and the second information.

Based on the foregoing technical solution, a receive side determines the multiplexing relationship between the DMRS port and the sensing port by using the received first information, and the first resource element corresponding to the DMRS port and the second resource element corresponding to the sensing port overlap on the frequency domain resource. In addition, the second information including the first PTRS and the sensing signal is received, where the first PTRS is on the overlapping resource element. In this way, multiplexing of the PTRS and the sensing signal is implemented, that is, a sensing function is satisfied while phase noise estimation of a communication link is implemented.

The method may be applied to integrated sensing and communication application scenarios such as low-altitude security protection, smart transportation, smart home, social governance, and smart healthcare. The communication apparatus may be used as an information receive end.

Optionally, in a possible implementation of the first aspect or the second aspect, the multiplexing relationship includes a case that the sensing port belongs to the DMRS port.

In this possible implementation, the sensing port belongs to the DMRS port, to implement multiplexing of sensing and communication ports, and improve an effect of integrated sensing and communication.

Optionally, in a possible implementation of the first aspect or the second aspect, a quantity of DMRS ports is greater than or equal to a quantity of sensing ports.

In this possible implementation, the DMRS port and the sensing port may be completely multiplexed, to improve an effect of integrated sensing and communication.

Optionally, in a possible implementation of the first aspect or the second aspect, the multiplexing relationship includes a case that some of the sensing ports belong to the DMRS port.

In this possible implementation, some of the sensing ports belong to the DMRS port, to implement multiplexing of some sensing ports and a communication port, and improve an effect of integrated sensing and communication.

Optionally, in a possible implementation of the first aspect or the second aspect, a quantity of DMRS ports is less than a quantity of sensing ports.

In this possible implementation, when the quantity of sensing ports is greater than the quantity of DMRS ports, some sensing ports may be multiplexed with the DMRS ports, to implement multiplexing of some sensing ports and a communication port, and improve an effect of integrated sensing and communication.

Optionally, in a possible implementation of the first aspect or the second aspect, the first information is a first value, and the first value indicates that a location of the first PTRS is a subcarrier on which a DMRS corresponding to a minimum index in the first resource element is located.

In this possible implementation, the first information is used to specifically indicate that the location of the first PTRS is on the subcarrier of the first resource element used by the scheduled DMRS port. This ensures orthogonality, and enables multiplexing of the PTRS and sensing, that is, satisfies orthogonality between communication and sensing without sacrificing spectral efficiency of communication.

Optionally, in a possible implementation of the first aspect or the second aspect, the first information is a second value, the second value indicates that a location of the first PTRS is a subcarrier on which a DMRS corresponding to a minimum index in a third resource element is located, and the third resource element is a resource element other than the first resource element and the second resource element.

In this possible implementation, the first information is used to specifically indicate that the location of the first PTRS is on the subcarrier of the first resource element used by an unscheduled DMRS port. This ensures orthogonality, and enables multiplexing of the PTRS and sensing, that is, satisfies orthogonality between communication and sensing without sacrificing spectral efficiency of communication.

Optionally, in a possible implementation of the first aspect or the second aspect, the second information further includes a second PTRS, and the second PTRS is on a fourth resource element.

In this possible implementation, in addition to the first PTRS multiplexed with sensing, the second information may further include the second PTRS not multiplexed with sensing.

Optionally, in a possible implementation of the first aspect or the second aspect, the sensing signal is related to a sensing sequence and a root coefficient.

In this possible implementation, sensing performance of the sensing signal may be affected by the sensing sequence and the root coefficient.

Optionally, in a possible implementation of the first aspect or the second aspect, the root coefficient is related to at least one of the following: a threshold of a peak to sidelobe level ratio PSLR, a detection distance range for sensing, a detection speed range for sensing, a sequence length of the sensing signal, and a quantity of resource elements REs allocated to the first PTRS signal.

In this possible implementation, a parameter that affects a value of the root coefficient is considered, and sensing performance may be adjusted by controlling the parameter.

Optionally, in a possible implementation of the first aspect or the second aspect, the root coefficient satisfies the following formula: ${c}_{1} < \frac{{CT}_{s} {M}_{PTRS}}{2 D} ;$ and
*c*₁ represents the root coefficient, *C* represents a speed of light, *Tₛ* represents a sampling interval of the sensing signal, *M PTRS* represents the quantity of REs, and *D* represents a value in the detection distance range.

In this possible implementation, a value range of the root coefficient is limited, so that performance of the sensing signal can be better.

Optionally, in a possible implementation of the first aspect or the second aspect, the root coefficient has an association relationship with the quantity of REs, the root coefficient is related to the detection distance range, or the root coefficient is related to the quantity of REs and the detection distance range.

In this possible implementation, the value of the root coefficient may be affected by the quantity of REs for the first PTRS, affected by the detection distance range, or affected by both the quantity of REs for the first PTRS and the detection distance range.

Optionally, in a possible implementation of the first aspect or the second aspect, energy of a signal carried by the overlapping resource element is greater than or equal to a first preset threshold.

In this possible implementation, energy of a multiplexed resource element is limited, so that a multiplexing effect can be more obvious.

Optionally, in a possible implementation of the first aspect or the second aspect, an index of the overlapping resource element is greater than or equal to a second preset threshold.

In this possible implementation, an index of a multiplexed resource element is limited, so that the multiplexed resource element can be determined, and the receive end can more clearly determine the multiplexed resource element, thereby quickly determining the first PTRS and the sensing signal.

Optionally, in a possible implementation of the first aspect or the second aspect, the second information further includes first data, and the first data includes uplink data and/or downlink data.

In this possible implementation, the method provided in this application may be applied to uplink transmission and downlink transmission, to improve a plurality of application scenarios of the solution.

According to a third aspect of this application, a communication apparatus is provided. The communication apparatus may be applied to integrated sensing and communication application scenarios such as low-altitude security protection, smart transportation, smart home, social governance, and smart healthcare. Specifically, the communication apparatus may be a terminal device or a network device. The communication apparatus may be used as an information transmit end. The communication apparatus includes: a transceiver unit, configured to send first information, where the first information indicates a multiplexing relationship between a DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and the transceiver unit is further configured to send second information, where the second information includes the DMRS, a first phase noise tracking reference signal PTRS, and the sensing signal, and the first PTRS is on an overlapping resource element.

According to a fourth aspect of this application, a communication apparatus is provided. The communication apparatus may be applied to integrated sensing and communication application scenarios such as low-altitude security protection, smart transportation, smart home, social governance, and smart healthcare. Specifically, the communication apparatus may be a network device or a terminal device. The communication apparatus may be used as an information receive end. The communication apparatus includes: a transceiver unit, configured to receive first information, where the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and the transceiver unit is further configured to receive second information, where the second information includes the DMRS, a first phase noise tracking reference signal PTRS, and the sensing signal, and the first PTRS is on an overlapping resource element; and a processing unit, configured to determine the first PTRS signal and the sensing signal based on the first information and the second information.

Optionally, in a possible implementation of the third aspect or the fourth aspect, the multiplexing relationship includes a case that the sensing port belongs to the DMRS port.

Optionally, in a possible implementation of the third aspect or the fourth aspect, a quantity of DMRS ports is greater than or equal to a quantity of sensing ports.

Optionally, in a possible implementation of the third aspect or the fourth aspect, the multiplexing relationship includes a case that some of the sensing ports belong to the DMRS port.

Optionally, in a possible implementation of the third aspect or the fourth aspect, a quantity of DMRS ports is less than a quantity of sensing ports.

Optionally, in a possible implementation of the third aspect or the fourth aspect, the first information is a first value, and the first value indicates that a location of the first PTRS is a subcarrier on which a DMRS corresponding to a minimum index in the first resource element is located.

Optionally, in a possible implementation of the third aspect or fourth second aspect, the first information is a second value, the second value indicates that a location of the first PTRS is a subcarrier on which a DMRS corresponding to a minimum index in a third resource element is located, and the third resource element is a resource element other than the first resource element and the second resource element.

Optionally, in a possible implementation of the third aspect or fourth second aspect, the second information further includes a second PTRS, and the second PTRS is on a fourth resource element.

Optionally, in a possible implementation of the third aspect or the fourth aspect, the sensing signal is related to a sensing sequence and a root coefficient.

Optionally, in a possible implementation of the third aspect or the fourth aspect, the root coefficient is related to at least one of the following: a threshold of a peak to sidelobe level ratio PSLR, a detection distance range for sensing, a detection speed range for sensing, a sequence length of the sensing signal, and a quantity of resource elements REs allocated to the first PTRS signal.

Optionally, in a possible implementation of the third aspect or the fourth aspect, the root coefficient satisfies the following formula: ${c}_{1} < \frac{{CT}_{s} {M}_{PTRS}}{2 D} ;$ and
*c*₁ represents the root coefficient, *C* represents a speed of light, *Tₛ* represents a sampling interval of the sensing signal, *M_{PTRS}* represents the quantity of REs, and *D* represents a value in the detection distance range.

Optionally, in a possible implementation of the third aspect or the fourth aspect, the root coefficient has an association relationship with the quantity of REs, the root coefficient is related to the detection distance range, or the root coefficient is related to the quantity of REs and the detection distance range.

Optionally, in a possible implementation of the third aspect or the fourth aspect, energy of a signal carried by the overlapping resource element is greater than or equal to a first preset threshold.

Optionally, in a possible implementation of the third aspect or the fourth second aspect, an index of the overlapping resource element is greater than or equal to a second preset threshold.

Optionally, in a possible implementation of the third aspect or the fourth aspect, the second information further includes first data, and the first data includes uplink data and/or downlink data.

According to a fifth aspect of this application, a communication apparatus is provided, including at least one processor. The at least one processor is coupled to a memory. The memory is configured to store a program or instructions. The at least one processor is configured to execute the program or the instructions, to cause the method according to any one of the possible implementations in any aspect of the first aspect to be implemented.

According to a sixth aspect of this application, a communication apparatus is provided, including at least one processor. The at least one processor is coupled to a memory. The memory is configured to store a program or instructions. The at least one processor is configured to execute the program or the instructions, to cause the method according to any one of the possible implementations in any aspect of the second aspect to be implemented.

According to a seventh aspect of this application, a communication apparatus is provided, including at least one logic circuit and an input/output interface. The logic circuit and the input/output interface are configured to perform the method according to any one of the possible implementations in any aspect of the first aspect.

According to an eighth aspect of this application, a communication apparatus is provided, including at least one logic circuit and an input/output interface. The logic circuit and the input/output interface are configured to perform the method according to any one of the possible implementations in any aspect of the second aspect.

According to a ninth aspect of this application, a communication apparatus is provided. The communication apparatus includes at least one processor, configured to implement functions in the method according to any one of the possible implementations in any aspect of the first aspect. The communication apparatus may further include a memory. The memory is configured to store program instructions and data that are necessary for the communication apparatus. Optionally, the communication apparatus further includes an interface circuit. The communication apparatus provides program instructions and/or data for the at least one processor.

According to a tenth aspect of this application, a communication apparatus is provided. The communication apparatus includes at least one processor, configured to implement functions in the method according to any one of the possible implementations in any aspect of the second aspect. The communication apparatus may further include a memory. The memory is configured to store program instructions and data that are necessary for the communication apparatus. Optionally, the communication apparatus further includes an interface circuit. The communication apparatus provides program instructions and/or data for the at least one processor.

The communication apparatuses according to the fifth aspect to the tenth aspect of this application may be terminal devices or network devices, or may be chips or chip systems in terminal devices or network devices. The chip system may include a chip, or may include a chip and another discrete component.

According to an eleventh aspect of this application, a computer-readable storage medium storing one or more computer-executable instructions is provided. When the computer-executable instructions are executed by a processor, the processor performs the method according to any one of the possible implementations in any aspect of the first aspect or the second aspect.

According to a twelfth aspect of this application, a computer program product (or referred to as a computer program) is provided. When the computer program product is executed by a processor, the processor performs the method according to any one of the possible implementations in any aspect of the first aspect or the second aspect.

According to a thirteenth aspect of this application, a communication system is provided. The communication system includes the communication apparatus according to the first aspect and the communication apparatus according to the second aspect. Alternatively, the communication system includes the communication apparatus according to the third aspect and the communication apparatus according to the fourth aspect, the communication system includes the communication apparatus according to the fifth aspect and the communication apparatus according to the sixth aspect, the communication system includes the communication apparatus according to the seventh aspect and the communication apparatus according to the eighth aspect, or the communication system includes the communication apparatus according to the ninth aspect and the communication apparatus according to the tenth aspect.

For technical effects brought by any design manner in the third aspect to the thirteenth aspect, refer to technical effects brought by different design manners in any aspect of the first aspect or the second aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2A is another diagram of a communication system according to this application;
FIG. 2B is another diagram of a communication system according to this application;
FIG. 3A is a diagram of an existing superposition solution of communication and sensing according to this application;
FIG. 3B is a diagram of another existing superposition solution of communication and sensing according to this application;
FIG. 4 is a schematic flowchart of a communication method according to this application;
FIG. 5A is a diagram of a structure of second information according to this application;
FIG. 5B is a diagram of ambiguity functions corresponding to different root indices according to this application;
FIG. 6 is a diagram of a communication apparatus according to this application;
FIG. 7 is another diagram of a communication apparatus according to this application;
FIG. 8 is another diagram of a communication apparatus according to this application; and
FIG. 9 is another diagram of a communication apparatus according to this application.

### DESCRIPTION OF EMBODIMENTS

The following clearly and completely describes the technical solutions in embodiments of this application with reference to the accompanying drawings in embodiments of this application.

First, some terms in embodiments of this application are described for ease of understanding by a person skilled in the art.

### 1. Terms Related to Fourier Transform and Explanations

Discrete Fourier transform (discrete Fourier transform, DFT), fast Fourier transform (fast Fourier transform, FFT), inverse discrete Fourier transform (inverse discrete Fourier transform, IDFT), and inverse fast Fourier transform (inverse fast Fourier transform, IFFT).

DFT/FFT: For a sequence {*x*(*n*), *n = 0,..., N -I}* of a point *N* , DFT may be shown as the following formula: $X \left(k\right) = γ {\sum }_{n = 0}^{N - 1} x \left(n\right) {e}^{- j 2 π \frac{nk}{N}} ,$ and k = 0,..., *N* - 1.

*Y* is a constant, and usually, $γ = 1 , γ = \frac{1}{\sqrt{N}}$, or $γ = \frac{1}{N}$. The foregoing formula may also be understood as converting a time domain sequence {*x*(*n*)} into a frequency domain sequence *{X* (*k*)}.

IDFT/IFFT: For a sequence {*X*(*k*), *k = 0,..., N -1}* of a point N , IDFT may be shown as the following formula: $x \left(k\right) = β {\sum }_{n = 0}^{N - 1} X \left(k\right) {e}^{j 2 π \frac{nk}{N}} ,$ and *n* = 0,..., *N* -1.

*β* is a constant, and usually, *β* =1, $β = \frac{1}{\sqrt{N}}$, or $β = \frac{1}{N}$. The foregoing formula may also be understood as converting a frequency domain sequence *{X* (*k*)} into a time domain sequence {*x*(*n*)}.

### 2. Phase Noise

Phase noise (Phase noise) is a random change that is of a phase of a system output signal of a system (for example, various radio frequency devices) and that is caused by various types of noise. Phase noise is a critical metric for evaluating frequency stability of frequency standard sources (such as a high-stability crystal oscillator and an atomic frequency standard). As an operating frequency band of a communication system becomes increasingly higher, a high frequency induces a more intense phase waveform, posing a challenge to stable data transmission.

### 3. Configuration and Preconfiguration

The configuration means that a network device/a server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value negotiated by a network device/a server with a terminal device in advance, may be parameter information or a parameter value used by a base station/a network device or a terminal device as specified in a standard protocol, or may be parameter information or a parameter value pre-stored in a base station/a server or a terminal device. This is not limited in this application. Further, these values and parameters may be changed or updated.

4. The terms "system" and "network" may be used interchangeably in embodiments of this application. "At least one" means one or more, and "a plurality of" means two or more. "And/Or" is used to describe an association relationship between associated objects, and represents that three relationships may exist. For example, "A and/or B" may represent the following cases: Only A exists, only B exists, and both A and B exist, where A and B may be singular or plural. The character "/" generally represents an "or" relationship between the associated objects. At least one of the following items (pieces) or a similar expression thereof indicates any combination of these items, including a single item (piece) or any combination of a plurality of items (pieces). For example, "at least one of A, B, and (or) C" may represent that only A exists, only B exists, only C exists, both A and B exist, both A and C exist, both B and C exist, and all of A, B, and C exist. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

In this application, for same or similar parts of embodiments, mutual reference may be made between the embodiments, unless otherwise specified. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application do not constitute a limitation on the protection scope of this application.

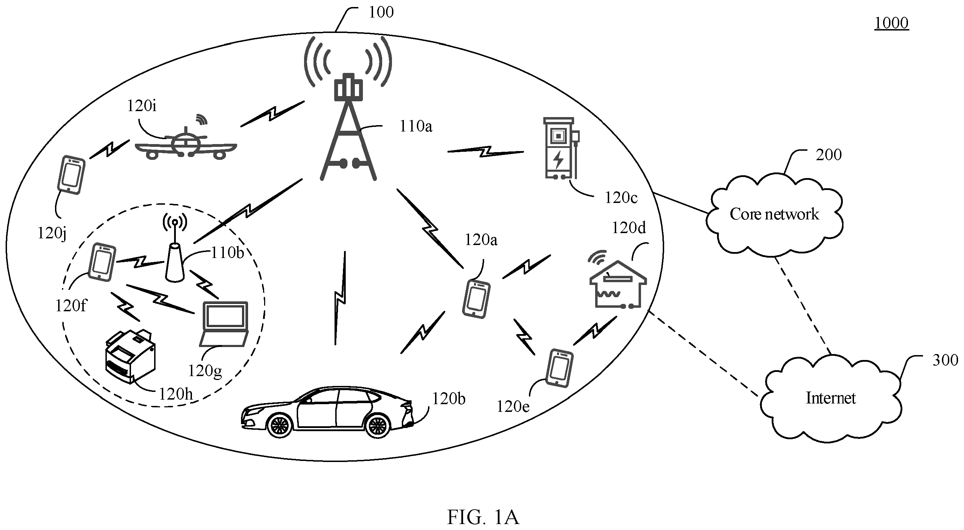

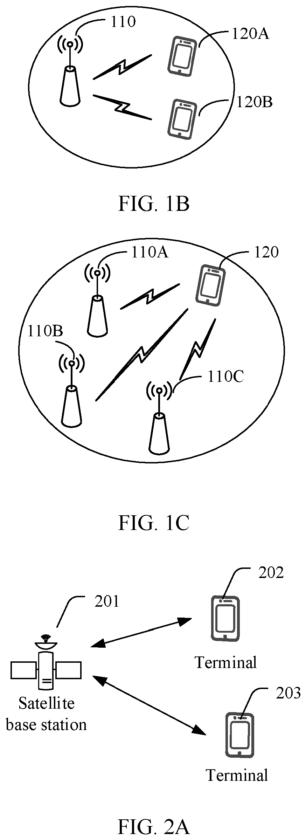

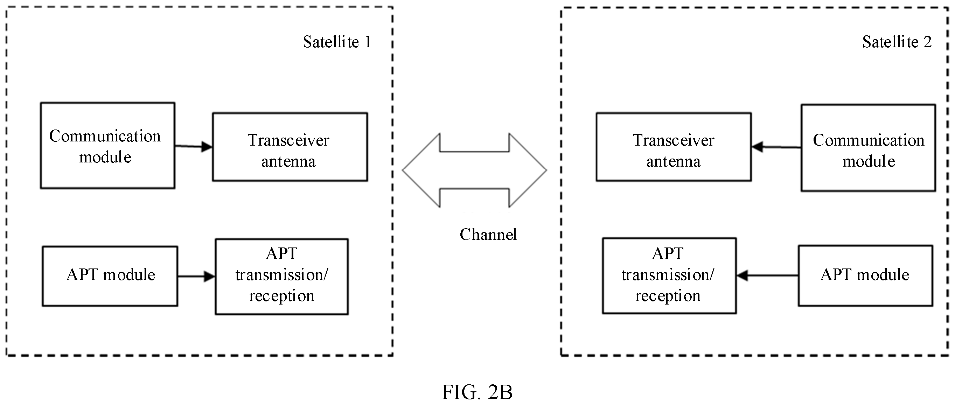

The communication method provided in embodiments of this application may be applied in a plurality of scenarios, for example, to a wireless communication system shown in FIG. 1A to FIG. 1C, to a satellite and terminal communication system shown in FIG. 2A, and to an inter-satellite communication system shown in FIG. 2B. The following describes a plurality of scenarios by using examples.

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include an Internet 300. The RAN 100 includes at least one RAN node (for example, 110a and 110b in FIG. 1A, which are collectively referred to as 110), and may further include at least one terminal (for example, 120a to 120j in FIG. 1A, which are collectively referred to as 120). The RAN 100 may further include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different and separate physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access the communication system in a wireless manner. In an application scenario, the RAN node may be a base station (base station), an evolved base station (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1A), may be a micro base station or an indoor base station (for example, 110b in FIG. 1A), or may be a relay node or a donor node.

In another application scenario, a plurality of RAN nodes may cooperate to help a terminal implement radio access, and different RAN nodes respectively implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application.

In addition, the RAN node may also be referred to as a network device. The network device is an apparatus that is deployed in the radio access network and that provides a wireless communication function for the terminal device. The network device may include various forms of macro base stations, micro base stations (also referred to as small cells), relay stations, access points, and the like. In systems using different radio access technologies, names of the network device may be different, for example, an eNB or an eNodeB (evolutional NodeB) in long term evolution (Long Term Evolution, LTE). Alternatively, the network device may be a radio controller in a cloud radio access network (cloud radio access network, CRAN) scenario. Alternatively, the network device may be a base station device in a future 5G network or a network device in a future evolved PLMN network. The network device may alternatively be a wearable device or a vehicle-mounted device. Alternatively, the network device may be a transmission reception point (transmission and reception point, TRP). In addition, in a network structure, the network device may include a central unit (central unit, CU) node, a distributed unit (distributed unit, DU) node, or a RAN device including a CU node and a DU node. For ease of description, the following uses a base station as an example of the RAN node for description.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1A may be configured as a mobile base station. For the terminal 120j that accesses the radio access network 100 through 120i, the terminal 120i is a base station. However, for the base station 110a, 120i is a terminal. In other words, communication between 110a and 120i is performed based on a radio air interface protocol. Certainly, 110a and 120i may alternatively communicate with each other by using an interface protocol between the base stations. In this case, compared with 110a, 120i is also a base station. Therefore, both the base station and the terminal may be collectively referred to as communication apparatuses. 110a and 110b in FIG. 1A may be referred to as communication apparatuses having a function of the base station, and 120a to 120j in FIG. 1A may be referred to as communication apparatuses having a function of the terminal.

Communication may be performed between the base station and the terminal, between base stations, or between terminals by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem having the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus having the function of the terminal.

It may be understood that the RAN 100 has been described above, and includes at least one RAN node (for example, 110a and 110b in FIG. 1A, which are collectively referred to as 110), and may further include at least one terminal (for example, 120a to 120j in FIG. 1A, which are collectively referred to as 120).

In a possible implementation, the communication system shown in FIG. 1A may further be shown in FIG. 1B, that is, include one RAN node 110 and a plurality of terminals (for example, 120A and 120B in FIG. 1B). In this case, a single RAN node may transmit data or control signaling to one or more terminals.

In another possible implementation, the communication system shown in FIG. 1A may further be shown in FIG. 1C, that is, include a plurality of RAN nodes (for example, 110A, 110B, and 110C in FIG. 1C) 110 and one terminal 120. In this case, the plurality of RAN nodes may simultaneously transmit data or control signaling for a single terminal.

FIG. 2A is a diagram of a satellite and terminal communication system to which an embodiment of this application is applied. The communication system includes a satellite base station 201, a terminal 202, and a terminal 203.

The satellite base station 201 provides a communication service for a terminal device (for example, the terminal 202 and the terminal 203). The satellite base station 201 transmits downlink data to the terminal device. The terminal device transmits uplink data to the satellite base station 201. For description of the terminal device, refer to the foregoing description in FIG. 1A. Details are not described herein again.

FIG. 2B is a diagram of an inter-satellite communication system to which an embodiment of this application is applied. The communication system includes a satellite 1 and a satellite 2.

The satellite 1 includes a communication module, a transceiver antenna, an acquisition, pointing and tracking (acquisition, pointing and tracking, APT) module, and an APT transmit/receive module. The satellite 2 includes a communication module, a transceiver antenna, an APT module, and an APT transmit/receive module. The communication module and the transceiver antenna may also be referred to as a communication subsystem. The communication subsystem is responsible for inter-satellite information transmission, and is a main body of the inter-satellite communication system. The APT module and the APT transmit/receive module may be referred to as an APT system. The APT system is responsible for acquisition, pointing, and tracking between satellites. Determining a direction of arrival of an incoming signal refers to acquisition, adjusting a transmission wave to aim at a receiving direction refers to pointing, and continuously adjusting pointing and acquisition in an entire communication process refers to tracking.

It may be understood that the several communication systems in FIG. 1A to FIG. 2B are merely examples. In actual application, the communication method provided in embodiments of this application may be applied to a B5G system, a wireless fidelity (wireless fidelity, WI-FI) system, and the like. This is not specifically limited herein.

Integrated sensing and communication (integrated sensing and communication, ISAC) is widely considered as a key application scenario for the next-generation wireless communication, 6G. Simply speaking, a communication requirement is to send some information of a transmit end to a receive end. Simply speaking, sensing requirements include sensing a surrounding environment, a moving speed and a distance of an object, and the like, with conventional radar being the most traditional form of sensing.

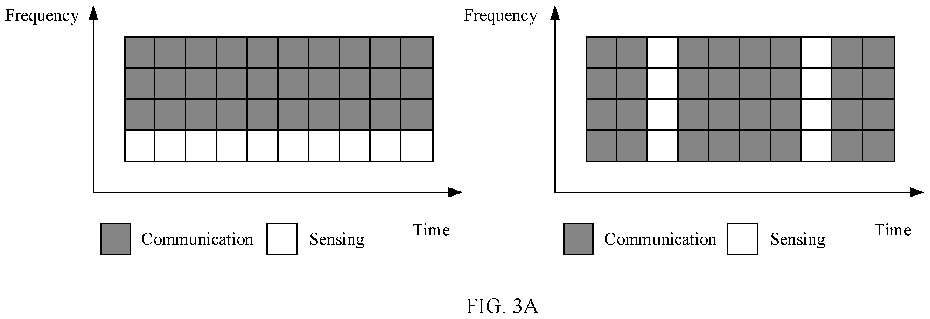

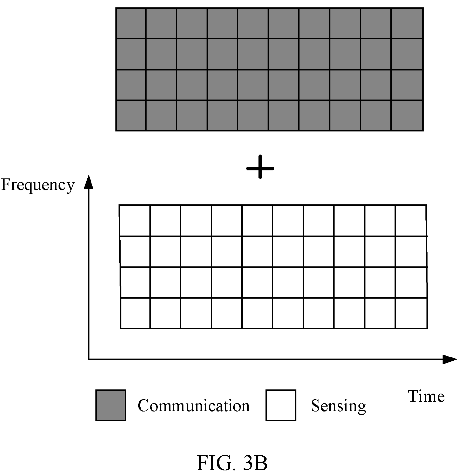

Currently, there are two solutions for superimposing communication and sensing. A solution is shown in FIG. 3A. Communication and sensing respectively occupy different time-frequency resources, to satisfy orthogonality between communication and sensing, that is, there is no interference between communication and sensing. However, a disadvantage of this solution is that the solution wastes spectral efficiency, that is, for conventional communication, it may be considered that some of frequency and time resources of communication are allocated to sensing. Another solution is shown in FIG. 3B. A sensing signal is directly superimposed on a communication signal, and occupies a same time-frequency resource. An advantage of this solution is that communication efficiency is ensured, that is, the time-frequency resource in communication is not allocated to sensing. A disadvantage is that the signals are non-orthogonally superimposed, which causes severe interference.

However, existing solutions cannot satisfy orthogonality between communication and sensing without sacrificing spectral efficiency of communication.

To resolve the foregoing technical problems, embodiments of this application provide a communication method and a related apparatus. A transmit side indicates a multiplexing relationship between a demodulation reference signal (demodulation reference signal, DMRS) port and a sensing port by using first information, and a first resource element corresponding to the DMRS port and a second resource element corresponding to the sensing port overlap on a frequency domain resource. In addition, second information including a first phase noise tracking reference signal (phase noise tracking reference signal, PTRS) and a sensing signal is sent, and the first PTRS is on an overlapping resource element. In this way, multiplexing of the PTRS and the sensing signal is implemented, that is, a sensing function is satisfied while phase noise estimation of a communication link is implemented.

The following describes a communication method provided in embodiments of this application. The method may be performed by a communication apparatus. Unless otherwise specified, the "communication apparatus" in this application may be a communication apparatus (for example, a network device or a terminal device), may be a component (for example, a processor, a chip, or a chip system) in a communication apparatus, or may be a logical module or software that can implement all or some functions of a communication apparatus. The following describes the method only from perspectives of a transmit end and a receive end. For example, the transmit end is a network device, and the receive end is a terminal device. This case may be understood as downlink data transmission. For another example, the transmit end is a terminal device, and the receive end is a network device. This case may be understood as uplink data transmission.

The communication method provided in embodiments of this application may be applied to integrated sensing and communication application scenarios such as low-altitude security protection, smart transportation, smart home, social governance, and smart healthcare.

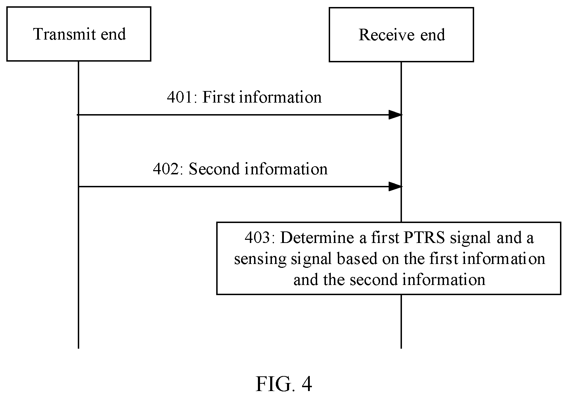

FIG. 4 is a schematic flowchart of a communication method according to an embodiment of this application. The method may include step 401 to step 403. Step 401 to step 403 may be performed by a terminal device or a network device, may be performed by some components (for example, a processor, a chip, or a chip system) in a terminal device or a network device, or may be implemented by a logical module or software that can implement all or some functions of a terminal device. The following uses an example in which the terminal device or the network device performs the steps for description. Processing performed by a single execution entity in step 401 to step 403 may alternatively be performed by a plurality of execution entities. These execution entities may be logically and/or physically separated. For example, processing performed by the network device may be performed by at least one of a CU, a DU, and an RU. The following describes step 401 to step 403 in detail.

Step 401: A transmit end sends first information.

The transmit end sends the first information to a receive end. Correspondingly, the receive end receives the first information sent by the transmit end.

The first information indicates a multiplexing relationship between a demodulation reference signal (demodulation reference signal, DMRS) port and a sensing port. The DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource. The DMRS port may be understood as a port used for transmitting the DMRS, and the sensing port may be understood as a port used for transmitting the sensing signal.

The first information indicates the multiplexing relationship between the DMRS port and the sensing port. In some scenarios, it may also be understood as that the first information indicates a location of the first phase noise tracking reference signal (phase noise tracking reference signal, PTRS), and the location may be used by the receive end to subsequently determine the first PTRS and the sensing signal. How the first information indicates the location is subsequently described, and details are not described herein again. The multiplexing relationship may also be understood as that the DMRS port is the same as some or all sensing ports, that is, the first PTRS and the sensing signal are transmitted through a same antenna port.

The first information may also be understood as configuration information or indication information. That the first resource element and the second resource element overlap on the frequency domain resource may also be understood as that there is an overlapping resource element between the first resource unit and the second resource unit. It may be further understood that the sensing port multiplexes a resource of the DMRS port. It may be further understood that all or some of the sensing ports multiplex the DMRS port.

In this embodiment of this application, the overlapping resource element may satisfy at least one of the following conditions: energy of a signal carried by the overlapping resource element is greater than or equal to a first preset threshold, an index of the overlapping resource element is greater than or equal to a second preset threshold, and the like.

Optionally, when the first information is a first value, the first information indicates that the sensing port belongs to the DMRS port. When the first information is a second value, the first information indicates that some of the sensing ports belong to the DMRS port. Alternatively, when the first information is a first value, the first information indicates that the first PTRS is at a first location. When the first information is a second value, the first information indicates that the first PTRS is at a second location.

It may be understood that the first information may also indicate different modes, and a manner of calculating a location of the first PTRS varies in different modes. For example, when the first information is the first value, the first information indicates a first mode. When the first information is the second value, the first information indicates a second mode.

For example, the first information may use one bit to indicate the multiplexing relationship between the DMRS port and the sensing port or the location of the first PTRS. For example, the first information "1" indicates that the sensing port belongs to the DMRS port, and the first information "0" indicates that some of the sensing ports belong to the DMRS port. For another example, the first information "1" indicates that the first PTRS is at the first location, and the first information "0" indicates that the first PTRS is at the second location.

Certainly, alternatively, the first information "0" may indicate that the sensing port belongs to the DMRS port, and the first information "1" may indicate that some of the sensing ports belong to the DMRS port. For another example, the first information "0" indicates that the first PTRS is at the first location, and the first information "1" indicates that the first PTRS is at the second location.

Further, when the first information indicates that the sensing port belongs to the DMRS port, a quantity of DMRS ports is usually greater than or equal to a quantity of sensing ports. When the first information indicates that some of the sensing ports belong to the DMRS port, a quantity of DMRS ports is usually less than a quantity of sensing ports.

In this embodiment of this application, there are a plurality of cases of the first information. The following separately describes the cases.

In a first case, the first information indicates that the first PTRS is further placed on a location in which an amplitude of the sensing signal is greater than or equal to a preset amplitude.

This case may be understood as determining a placement location of the sensing signal based on whether the sensing signal is a constant modulus signal. The constant modulus signal means that the amplitude of the sensing signal does not change with a frequency/time sequence, and a non-constant modulus signal means that the amplitude of the sensing signal changes with a frequency/time sequence.

In a possible implementation, if the sensing signal is a constant modulus signal, a location of the sensing signal and the location of the first PTRS may directly use an existing PTRS location in NR.

In another possible implementation, if the sensing signal is a non-constant modulus signal, a location of the sensing signal and the location of the first PTRS may be at a location at which the amplitude of the sensing signal is greater than or equal to the preset amplitude. The preset amplitude may be set according to an actual requirement, may be a fixed value, may be an average amplitude of the sensing signal, or the like. This is not specifically limited herein.

For example, the preset amplitude is an average amplitude, and the foregoing two implementations may be described by using the following Table 1:

**Table 1**

| Design rules | Locations of the first PTRS and the sensing signal |
|---|---|
| \|*Sₛₑₙ*\| is a constant modulus signal | The first PTRS and the sensing signal are directly placed at the existing PTRS location in NR |
| \|*Sₛₑₙ*\| is a non-constant modulus signal | The first PTRS and the sensing signal are placed on a subcarrier corresponding to k, and the amplitude of the sensing signal on the subcarrier corresponding to k is greater than or equal to the average amplitude of the sensing signal |

In a second case, the first information indicates that the sensing signal is further placed at a location at which energy is greater than or equal to preset energy in the symbol occupied by the first PTRS.

This case may be understood as location determining under power boosting. That is, the energy of the signal carried by the overlapping resource element is greater than or equal to preset energy.

The preset energy may be set based on an actual requirement, may be a fixed value, may be average energy of a signal within the symbol carrying the first PTRS, or the like. This is not specifically limited herein.

Optionally, the sensing signal and the first PTRS signal in the downlink transmission process may satisfy the following formula 1: ${y}_{k} = {h}_{k} {αs}_{sen , k} {e}^{jθ} + noise .$

*hₖ* represents a channel coefficient of a k^{th} subcarrier, *S_{sen,k}* represents the sensing signal, *α* represents a power factor (or referred to as a power increase multiple), and *noise* represents noise. *αs_{sen,k}* is used as the first PTRS to estimate phase noise *θ*.

For example, the preset energy is average energy. Then, |*αs_{sen,k}*| ≤ *A* , and *A* represents average energy of the signal within the symbol carrying the first PTRS.

In a possible implementation, |*αsₛₑₙ,*_{*k*1}| = *A, k*1 ∈ {Ω} , and Ω is a subcarrier index of the sensing port. In this case, the first PTRS is placed on a *k*1 subcarrier on which the sensing signal is located.

In another possible implementation, |*αs*_{*sen,k*2}| *< A* and *k2* ∈{Ω} . In this case, the first PTRS is not placed on a *k2* subcarrier on which the sensing signal is located.

In a third case, the first information indicates a start index of the location of the first PTRS.

This case is further divided into a plurality of sub-cases, which are described below separately:

1. The first information is the first value, and the first value indicates that the first PTRS is at the first location.

In this case, it may also be understood as that the first information indicates the first mode. That the first PTRS is at the first location may be understood as that the first PTRS is located on a subcarrier in the first resource element. It may also be understood as that the first PTRS is located on a subcarrier for scheduling the DMRS port.

Specifically, the first value may specifically indicate that the first PTRS is on a subcarrier corresponding to a specific index in the first resource element. The specific index in the first resource element may be set according to an actual requirement, for example, may be a minimum index, a maximum index, or an intermediate index.

For example, the first information is the first value, and the first value indicates that the location of the first PTRS is the subcarrier on which the DMRS corresponding to the minimum index in the first resource element is located.

For example, in this case, a location index of the first PTRS is shown in the following formula 2: $k = {k}_{ref , p}^{RE} + \left({iK}_{PTRS}+{k}_{ref , p}^{RB}\right) {N}_{SC}^{RB} .$${k}_{ref , p}^{RE} = {k}_{dmrs , p}^{RE}$, and *p* = min {schedeled *DMRS* port index } represents that a subcarrier start location of the first PTRS depends on the scheduled DMRS port, that is, the sensing port belongs to the currently scheduled DMRS port. In this case, the start location is determined by a minimum index of the DMRS port.

*K_{PTRS}* represents a quantity of resource elements (resource element, RE) for one first PTRS, for example, two or four.

i is a positive integer, and *i* = 0,1,2....${N}_{SC}^{RB}$ represents that an RB may be used as a reference for a spacing, and one RB has 12 subcarriers. It may be understood that another reference may be used as a spacing, or one RB may have more or fewer subcarriers. This is not specifically limited herein.

For example, there are four DMRS ports, which are respectively a port 0, a port 1, a port 2, and a port 3. The first PTRS is located in the port 0, the first PTRS is placed on one or some subcarriers of the port 0, and the sensing signal is placed on another or other subcarriers.

2. The first information is the second value, and the second value indicates that the first PTRS is at the second location.

In this case, it may also be understood as that the first information indicates the second mode. That the first PTRS is at the second location may be understood as that the first PTRS is located on a subcarrier in a third resource element, and the third resource element is a resource element other than the first resource element and the second resource element. It may also be understood that the first PTRS is located on a subcarrier of a non-scheduled (or referred to as unscheduled) DMRS port.

Specifically, the second value may specifically indicate that the first PTRS is on a subcarrier corresponding to a specific index in the third resource element. Similar to the first case, the specific index in the third resource element may be set according to an actual requirement, for example, may be a minimum index, a maximum index, or an intermediate index.

For example, in this case, a location index of the first PTRS is shown in the following formula 3: $k = {k}_{ref , p}^{RE} + \left({iK}_{PTRS}+{k}_{ref , p}^{RB}\right) {N}_{SC}^{RB} .$${k}_{ref , p}^{RE} = {k}_{dmrs , p}^{RE}$, and *p =* min {not schedeled *DMRS* port index } represents that a subcarrier start location of the first PTRS depends on the unscheduled DMRS port, that is, the sensing port does not belong to the currently scheduled DMRS port. In this case, the start location is determined by a minimum index of the DMRS port. For other parameters, refer to the description in the foregoing formula 2. Details are not described herein again.

For example, there is one DMRS port: a port 0. The first PTRS is located in another port (for example, the port 1) other than the port 0. The first PTRS is placed on one or some subcarriers of the port 1, and the sensing signal is placed on another or other subcarriers.

In this embodiment of this application, the transmit end may send the first information to a specified receive end, may send the first information in a broadcast manner, or the like. This is not specifically limited herein.

In a possible implementation, the transmit end is a network device, and the receive end is a terminal device. The network device sends the first information to the terminal device. Correspondingly, the terminal device receives the first information sent by the network device.

In this case, that the network device sends the first information to the terminal device may be understood as a process of configuring the first information for the terminal device. Specifically, the network device may configure the first information for the terminal device in a configuration or preconfiguration manner. The configuration means that a network device such as a base station or a server sends configuration information of some parameters or values of parameters to the terminal device by using a message or signaling, so that the terminal device determines a parameter for communication or a resource for transmission based on the values or the information. Similar to the configuration, the preconfiguration may be a manner in which a network device such as a base station or a server sends parameter information or values to the terminal device by using a communication link or on a carrier, or may be a manner in which a corresponding parameter or parameter value is defined (for example, the parameter value is clearly specified in a standard), or a related parameter or a value is written into the terminal device in advance. This is not limited in this application. Further, these values and parameters may be changed or updated.

Optionally, the first information may be carried in at least one of the following messages/signaling: radio resource control (radio resource control, RRC) signaling, a medium access control control element (medium access control control element, MAC CE), downlink control information (downlink control information, DCI), and the like. This is not specifically limited herein.

In another possible implementation, the transmit end is a terminal device, and the receive end is a network device. The terminal device sends the first information to the network device. Correspondingly, the network device receives the first information sent by the terminal device.

Optionally, the first information may be carried in uplink information.

In addition, a triggering manner of this step may be active triggering, or may be passive triggering. This is not specifically limited herein. For example, a process in which the network device sends the first information to the terminal device may be triggered based on a request of the terminal device. For another example, the network device actively sends the first information to the terminal device. For another example, a process in which the terminal device sends the first information to the network device may be triggered based on a request of the network device. For another example, the terminal device actively sends the first information to the network device.

Step 402: The transmit end sends second information.

The transmit end sends the second information to the receive end. Correspondingly, the receive end receives the second information sent by the transmit end.

The second information includes the DMRS, a first PTRS, and the sensing signal, and the first PTRS is on an overlapping resource element between the first resource element and the second resource element.

Optionally, the second information may further include a second PTRS, and the second PTRS is on a fourth resource element. Alternatively, it is understood that there is a second PTRS that is not multiplexed with sensing.

In this embodiment of this application, the transmit end may send the second information to a specified receive end, may send the first information in a broadcast manner, or the like. This is not specifically limited herein.

In a possible implementation, the transmit end is a network device, and the receive end is a terminal device. The network device sends the second information to the terminal device. Correspondingly, the terminal device receives the second information sent by the network device. This case may be understood as a downlink transmission process.

Optionally, the first information in this case may also be referred to as a downlink frame. In addition to the DMRS, the first PTRS, and the sensing signal, the downlink frame may further include downlink data.

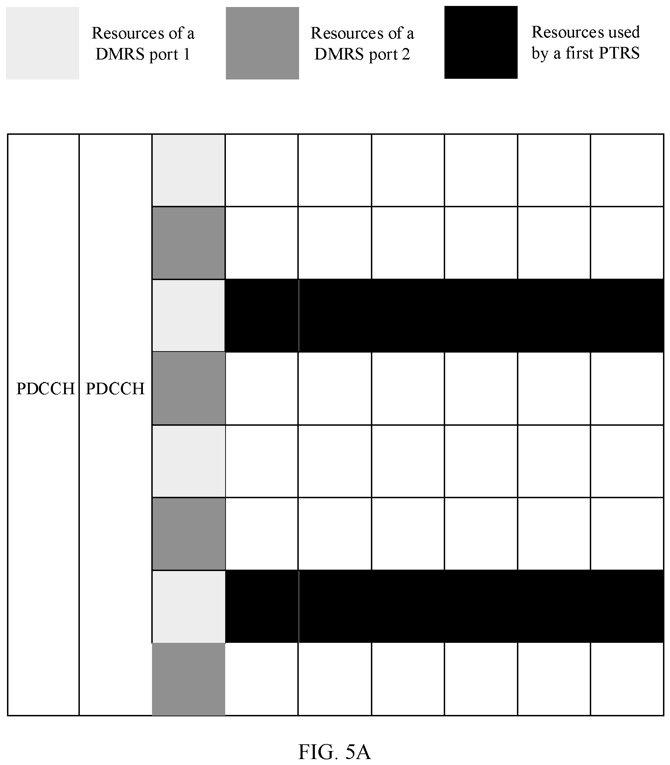

For example, the second information is shown in FIG. 5A. In this example, there are two DMRS ports: a DMRS port 1 and a DMRS port 2. In this case, the first PTRS signal and the sensing signal may be placed on a subcarrier corresponding to the DMRS port 1. The subcarrier satisfies the requirement in the first information.

Optionally, the sensing signal and the first PTRS signal in the downlink transmission process may satisfy the following formula 4: ${y}_{k} = {h}_{k} {αs}_{sen , k} {e}^{jθ} + noise .$

*hₖ* represents a channel coefficient of a k^{th} subcarrier, *s_{sen,k}* represents the sensing signal, *α* represents a power factor, and *noise* represents noise. *αs_{sen,k}* is used as the first PTRS to estimate phase noise *θ*.

In this case, the sensing signal is a signal recovered from an original signal having passing through a channel: ${h}_{k} {s}_{sen , k} = \frac{{y}_{k} - {h}_{k} \left(α-1\right) {s}_{sen , k} {e}^{jθ}}{{e}^{jθ}} .$

In another possible implementation, the transmit end is a terminal device, and the receive end is a network device. The terminal device sends the second information to the network device. Correspondingly, the network device receives the second information sent by the terminal device. This case may be understood as an uplink transmission process.

Optionally, the first information in this case may also be referred to as an uplink frame. In addition to the DMRS, the first PTRS, and the sensing signal, the uplink frame may further include uplink data.

Optionally, the sensing signal and the first PTRS signal in the uplink transmission process may satisfy the following formula 5: ${y}_{n} = {αs}_{sen , n} {e}^{{jθ}_{n}} + noise .$

*s_{sen,n}* = *βe*^{*j*2π*c*1*n*2} represents the sensing signal, *α* represents a power factor, and *noise* represents noise. *αs_{sen,n}* is used as the first PTRS to estimate phase noise *θₙ*.

In this case, the sensing signal is a signal recovered from an original signal having passing through a channel: ${s}_{sen , k} = \frac{{y}_{k} - {h}_{k} \left(α-1\right) {s}_{sen , n} {e}^{{jθ}_{n}}}{{e}^{{jθ}_{n}}} .$

Similar to step 401, a triggering manner of this step may be active triggering, or may be passive triggering. This is not specifically limited herein. For example, a process in which the network device sends the second information to the terminal device may be triggered based on a request of the terminal device. For another example, the network device actively sends the second information to the terminal device. For another example, a process in which the terminal device sends the second information to the network device may be triggered based on a request of the network device. For another example, the terminal device actively sends the second information to the network device.

A waveform used by the second information is not limited in this application, and may be cyclic prefix orthogonal frequency division multiplexing (cyclic prefix-orthogonal frequency division multiplexing, CP-DFDM), may be discrete Fourier transform spread OFDM (discrete Fourier transform spread OFDM, DFT-s-OFDM), or the like. This is not specifically limited herein.

Step 403: The receive end determines the first PTRS signal and the sensing signal based on the first information and the second information.

After receiving the first information and the second information, the receive end determines the first PTRS signal and the sensing signal based on the first information and the second information.

Optionally, the receive end may determine the first PTRS signal and the sensing signal from the second information based on the plurality of cases of the first information. Reference may be made to the description in step 401, and details are not described herein again.

For example, if the first information is the first value, the receive end may determine the first location of the first PTRS signal based on the first value. For another example, if the first information is the second value, the receive end may determine, based on the second value, that the first PTRS signal is at the second location. For another example, if the first information is the first value, the receive end may determine the location of the first PTRS based on the foregoing formula 1. For another example, if the first information is the second value, the receive end may determine the location of the first PTRS based on the foregoing formula 2.

In this embodiment of this application, a transmit side indicates the multiplexing relationship between the DMRS port and the sensing port by using the first information, and the first resource element corresponding to the DMRS port and the second resource element corresponding to the sensing port overlap on the frequency domain resource. In addition, the second information including the first PTRS and the sensing signal is sent, where the first PTRS is on the overlapping resource element. In this way, multiplexing of the PTRS and the sensing signal is implemented, that is, a sensing function is satisfied while phase noise estimation of a communication link is implemented.

In addition, an embodiment of this application further provides a sequence design of a sensing signal. Such a design may be applied to the sensing signal in the embodiment shown in FIG. 4. The following provides descriptions.

In this embodiment of this application, only an example in which the sensing signal uses a Zadoff-Chu (ZC) sequence is used for description. In actual application, the sensing signal may alternatively use a pseudo-random sequence, a phase modulation sequence, a Golay (golay) sequence, or the like. This is not specifically limited herein.

The sensing signal is related to a sensing sequence and a root coefficient (root), and the root coefficient may also be referred to as a root index.

Optionally, a downlink sensing signal may be represented as *s_{sen,k}* = *βe*^{*j*2*π*c1*k*2} , where *k* represents a frequency, or is understood as a quantity of REs; and an uplink sensing signal may be represented as *s_{sen,n}* = *βe*^{*j2*π*c*1*n*2}, where *n* represents a time index. *c*₁ represents a root, which affects performance of the sensing signal.

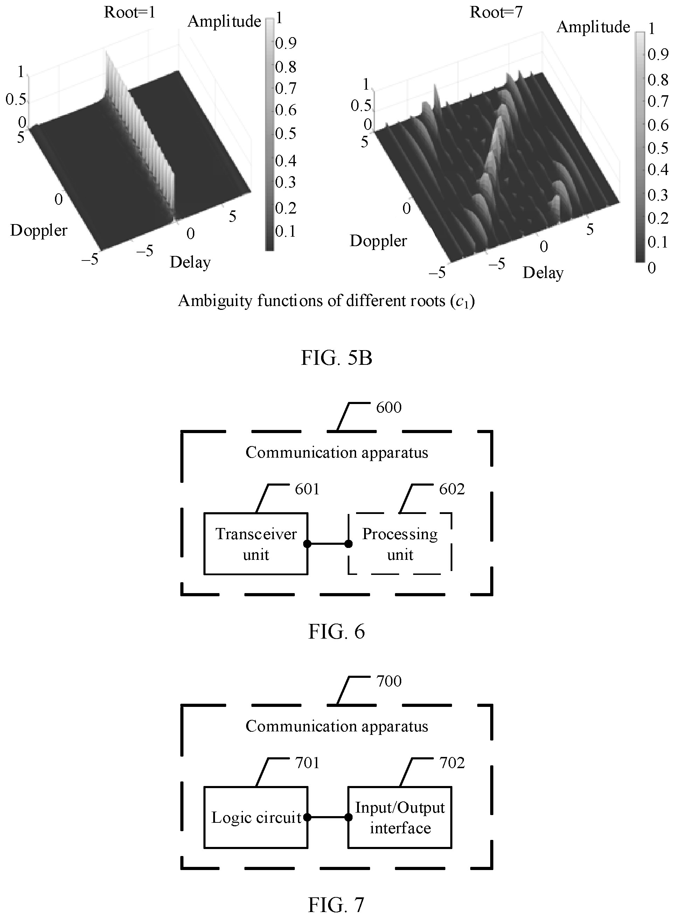

Roots of different ZC sequences directly cause different ambiguity functions. For example, FIG. 5B is a diagram of ambiguity functions corresponding to different root indices. That is, the root index affects sensing performance.

From the perspective of the ambiguity function, a peak to sidelobe level ratio (peak to sidelobe level ratio, PSLR) is usually used as a parameter of sensing performance.

That is, the PSLR may be represented as $PSLR = \left|\frac{sin \left({f}_{d}π+\frac{π}{{M}_{PTRS}}{c}_{1}\right)}{sin \left({f}_{d}π\right)}\right|$.

*f_{d}* represents Doppler of a detected object, and *M_{PTRS}* represents a quantity of REs for the first PTRS.

Alternatively, it is understood that the root coefficient is related to at least one of the following: a threshold of a PSLR, a detection distance range for sensing, a detection speed range for sensing, a sequence length of the sensing signal, a quantity of resource elements REs allocated to the first PTRS signal, and the like.

Further, a value range of the root coefficient is limited, so that performance of the sensing signal can be improved. For example, the root coefficient satisfies the following formula 6: ${c}_{1} < \frac{{CT}_{s} {M}_{PTRS}}{2 D} .$

*c*₁ represents the root coefficient, which is generally a positive integer, *C* represents a speed of light, *Tₛ* represents a sampling interval of the sensing signal, *M_{PTRS}* represents the quantity of REs, and *D* represents a value in the detection distance range.

In a possible implementation, there is an association relationship between the root coefficient and the quantity of REs for the first PTRS.

For example, when the quantity of REs for the first PTRS is 16, the value of the root coefficient is 3. For another example, when the quantity of REs for the first PTRS is 18, the value of the root coefficient is 9. For another example, when the quantity of REs for the first PTRS is 32, the value of the root coefficient is 13. For another example, when the quantity of REs for the first PTRS is 64, the value of the root coefficient is 21.

For example, the association relationship between the root coefficient and the quantity of REs for the first PTRS in this case may be shown in Table 2.

**Table 2**

| Quantity of REs for the first PTRS | *c*₁ |
|---|---|
| 16 | 3 |
| 18 | 9 |
| 32 | 13 |
| 64 | 21 |

In another possible implementation, the root coefficient is related to the detection distance range.

It may be understood that the detection distance range may be set according to an actual requirement, and may be in units such as meters, centimeters, or millimeters. In addition, different detection range distances may be spaced apart by a few meters, tens of meters, hundreds of meters, a few centimeters, tens of centimeters, hundreds of centimeters, a few millimeters, tens of millimeters, hundreds of millimeters, or the like.

For example, when the detection distance range is less than 100 meters, the value of the root coefficient is 7. For another example, when the detection distance range is between 100 meters and 200 meters, the value of the root coefficient is 11. For another example, when the detection distance range is less than 300 meters, the value of the root coefficient is 7. For another example, when the detection distance range is between 300 meters and 800 meters, the value of the root coefficient is 11.

For example, the association relationship between the root coefficient and the detection distance range in this case may be shown in Table 3.

**Table 3**

| Detection distance range (meter) | *c*₁ |
|---|---|
| 0 meters to 300 meters | 7 |
| 300 meters to 800 meters | 11 |

In another possible implementation, the root coefficient is related to the quantity of REs and the detection distance range.

For example, when the detection distance range is 0 meters to 300 meters, and the quantity of REs for the first PTRS is 16, the value of the root coefficient is 3. For another example, when the detection distance range is 300 meters to 800 meters, and the quantity of REs for the first PTRS is 16, the value of the root coefficient is 7. For another example, when the detection distance range is 0 meters to 300 meters, and the quantity of REs for the first PTRS is 18, the value of the root coefficient is 5. For another example, when the detection distance range is 300 meters to 800 meters, and the quantity of REs for the first PTRS is 18, the value of the root coefficient is 11. For another example, when the detection distance range is 0 meters to 300 meters, and the quantity of REs for the first PTRS is 32, the value of the root coefficient is 7. For another example, when the detection distance range is 300 meters to 800 meters, and the quantity of REs for the first PTRS is 32, the value of the root coefficient is 15. For another example, when the detection distance range is 0 meters to 300 meters, and the quantity of REs for the first PTRS is 64, the value of the root coefficient is 23. For another example, when the detection distance range is 300 meters to 800 meters, and the quantity of REs for the first PTRS is 64, the value of the root coefficient is 29.

For example, the association relationship between the root coefficient and both of the quantity of REs and the detection distance range in this case may be shown in Table 4.

**Table 4**

| Quantity of REs for the first PTRS | Detection distance range | *c*₁ |
|---|---|---|
| 16 | 0 meters to 300 meters | 3 |
| | 300 meters to 800 meters | 7 |
| 18 | 0 meters to 300 meters | 5 |
| | 300 meters to 800 meters | 11 |
| 32 | 0 meters to 300 meters | 7 |
| | 300 meters to 800 meters | 15 |
| 64 | 0 meters to 300 meters | 23 |
| | 300 meters to 800 meters | 29 |

It may be understood that the foregoing several values of the root coefficient are merely examples. In actual application, the root coefficient may be another value, or the value of the root coefficient may be limited by using another parameter. This is not specifically limited herein.

In this embodiment of this application, the root coefficient is associated with the foregoing parameters (for example, the threshold of the PSLR, the detection distance range for sensing, the detection speed range for sensing, the sequence length of the sensing signal, and the quantity of REs allocated to the first PTRS signal), or the value of the root coefficient is limited by using these parameters, so that the PSLR for sensing increases monotonically, meaning that sensing performance is gradually improved.

The foregoing describes the communication method in embodiments of this application. The following describes a communication apparatus in embodiments of this application. FIG. 6 shows an embodiment of a communication apparatus 600 in embodiments of this application. The communication apparatus 600 may implement functions of the communication apparatus (the communication apparatus is a network device or a terminal device) in the foregoing method embodiment, and therefore can also implement beneficial effects of the foregoing method embodiment. In this embodiment of this application, the communication apparatus 600 may be a communication apparatus, or may be an integrated circuit, a component, or the like, for example, a chip, in a communication apparatus. The communication apparatus 600 includes a transceiver unit 601. Optionally, the communication apparatus 600 may further include a processing unit 602.

In a possible implementation, the communication apparatus 600 is the transmit end in the embodiment shown in FIG. 1A to FIG. 5B. In this case, functions of various units are as follows.

The transceiver unit 601 is configured to send first information, where the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource.

The transceiver unit 601 is further configured to send second information, where the second information includes the DMRS, a first phase noise tracking reference signal PTRS, and the sensing signal, and the first PTRS is on an overlapping resource element.

Optionally, the multiplexing relationship includes a case that the sensing port belongs to the DMRS port.

Optionally, a quantity of DMRS ports is greater than or equal to a quantity of sensing ports.

Optionally, the multiplexing relationship includes a case that some of the sensing ports belong to the DMRS port.

Optionally, a quantity of DMRS ports is less than a quantity of sensing ports.

Optionally, the first information is a first value, and the first value indicates that a location of the first PTRS is a subcarrier on which a DMRS corresponding to a minimum index in the first resource element is located.

Optionally, the first information is a second value, the second value indicates that a location of the first PTRS is a subcarrier on which a DMRS corresponding to a minimum index in a third resource element is located, and the third resource element is a resource element other than the first resource element and the second resource element.

Optionally, the second information further includes a second PTRS, and the second PTRS is on a fourth resource element.

Optionally, the sensing signal is related to a sensing sequence and a root coefficient.

Optionally, the root coefficient is related to at least one of the following: a threshold of a peak to sidelobe level ratio PSLR, a detection distance range for sensing, a detection speed range for sensing, a sequence length of the sensing signal, and a quantity of resource elements REs allocated to the first PTRS signal.

Optionally, the root coefficient satisfies the following formula: ${c}_{1} < \frac{{CT}_{s} {M}_{PTRS}}{2 D} .$

*c*₁ represents the root coefficient, *C* represents a speed of light, *Tₛ* represents a sampling interval of the sensing signal, *M_{PTRS}* represents the quantity of REs, and *D* represents a value in the detection distance range.

Optionally, the root coefficient has an association relationship with the quantity of REs, the root coefficient is related to the detection distance range, or the root coefficient is related to the quantity of REs and the detection distance range.

Optionally, energy of a signal carried by the overlapping resource element is greater than or equal to a first preset threshold.

Optionally, an index of the overlapping resource element is greater than or equal to a second preset threshold.

Optionally, the second information further includes first data, and the first data includes uplink data and/or downlink data.

In this embodiment, operations performed by the units in the communication apparatus are similar to the description of the transmit end in the embodiment shown in FIG. 1A to FIG. 5B. Details are not described herein again.

In this embodiment, the transceiver unit 601 indicates the multiplexing relationship between the DMRS port and the sensing port by using the first information, and the first resource element corresponding to the DMRS port and the second resource element corresponding to the sensing port overlap on the frequency domain resource. The transceiver unit 601 sends the second information including the first PTRS and the sensing signal, and the first PTRS is on the overlapping resource element. In this way, multiplexing of the PTRS and the sensing signal is implemented, that is, a sensing function is satisfied while phase noise estimation of a communication link is implemented.

In another possible implementation, the communication apparatus 600 is the receive end in the embodiment shown in FIG. 1A to FIG. 5B. In this case, functions of various units are as follows.

A transceiver unit 601 is configured to receive first information, where the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource.

The transceiver unit 601 is further configured to receive second information, where the second information includes the DMRS, a first phase noise tracking reference signal PTRS, and the sensing signal, and the first PTRS is on an overlapping resource element.

A processing unit 602 is configured to determine the PTRS signal and the sensing signal based on the first information and the second information.

Optionally, the multiplexing relationship includes a case that the sensing port belongs to the DMRS port.

Optionally, a quantity of DMRS ports is greater than or equal to a quantity of sensing ports.

Optionally, the multiplexing relationship includes a case that some of the sensing ports belong to the DMRS port.

Optionally, a quantity of DMRS ports is less than a quantity of sensing ports.

Optionally, the first information is a first value, and the first value indicates that a location of the first PTRS is a subcarrier on which a DMRS corresponding to a minimum index in the first resource element is located.

Optionally, the first information is a second value, the second value indicates that a location of the first PTRS is a subcarrier on which a DMRS corresponding to a minimum index in a third resource element is located, and the third resource element is a resource element other than the first resource element and the second resource element.

Optionally, the second information further includes a second PTRS, and the second PTRS is on a fourth resource element.

Optionally, the sensing signal is related to a sensing sequence and a root coefficient.

Optionally, the root coefficient is related to at least one of the following: a threshold of a peak to sidelobe level ratio PSLR, a detection distance range for sensing, a detection speed range for sensing, a sequence length of the sensing signal, and a quantity of resource elements REs allocated to the first PTRS signal.

Optionally, the root coefficient satisfies the following formula: ${c}_{1} < \frac{{CT}_{s} {M}_{PTRS}}{2 D} .$

*c*₁ represents the root coefficient, *C* represents a speed of light, *Tₛ* represents a sampling interval of the sensing signal, *M_{PTRS}* represents the quantity of REs, and *D* represents a value in the detection distance range.

Optionally, the root coefficient has an association relationship with the quantity of REs, the root coefficient is related to the detection distance range, or the root coefficient is related to the quantity of REs and the detection distance range.

Optionally, energy of a signal carried by the overlapping resource element is greater than or equal to a first preset threshold.

Optionally, an index of the overlapping resource element is greater than or equal to a second preset threshold.

Optionally, the second information further includes first data, and the first data includes uplink data and/or downlink data.

In this embodiment, operations performed by the units in the communication apparatus are similar to description of the receive end in the embodiment shown in FIG. 1A to FIG. 5B. Details are not described herein again.

In this embodiment, the transceiver unit 601 determines the multiplexing relationship between the DMRS port and the sensing port by using the received first information, and the first resource element corresponding to the DMRS port and the second resource element corresponding to the sensing port overlap on the frequency domain resource. The transceiver unit 601 receives the second information including the first PTRS and the sensing signal, where the first PTRS is on the overlapping resource element. In this way, multiplexing of the PTRS and the sensing signal is implemented, that is, a sensing function is satisfied while phase noise estimation of a communication link is implemented.

FIG. 7 is a diagram of another structure of a communication apparatus 700 according to this application. The communication apparatus 700 includes a logic circuit 701 and an input/output interface 702. The communication apparatus 700 may be a chip or an integrated circuit.

The transceiver unit 601 shown in FIG. 6 may be a communication interface. The communication interface may be the input/output interface 702 in FIG. 7. The input/output interface 702 may include an input interface and an output interface. Alternatively, the communication interface may be a transceiver circuit, and the transceiver circuit may include an input interface circuit and an output interface circuit. The processing unit 602 shown in FIG. 6 may be the logic circuit 701 in FIG. 7.

Optionally, when the communication apparatus is the transmit end in the foregoing embodiment, the input/output interface 702 is configured to perform at least one of the following: sending first information, sending second information, and the like.

Optionally, when the communication apparatus is the receive end in the foregoing embodiment, the input/output interface 702 is configured to perform at least one of the following: receiving first information, receiving second information, and the like. The logic circuit 701 is configured to determine a first PTRS and a sensing signal based on the first information and the second information.

The logic circuit 701 and the input/output interface 702 may further perform other steps performed by the transmit end or the receive end in any embodiment, and implement corresponding beneficial effects. Details are not described herein again.

Optionally, the logic circuit 701 may be a processing apparatus, and some or all functions of the processing apparatus may be implemented by using software. Some or all functions of the processing apparatus may be implemented through software.

Optionally, the processing apparatus may include a memory and a processor. The memory is configured to store a computer program, and the processor reads and executes a computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

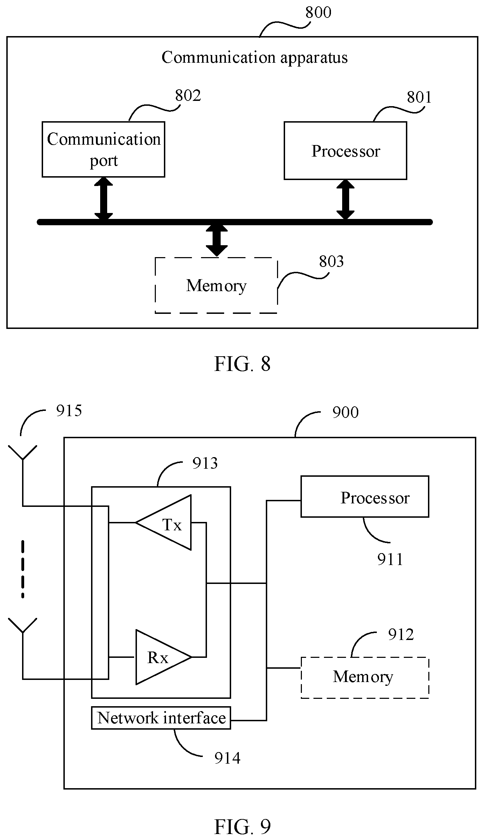

FIG. 8 shows a communication apparatus 800 in the foregoing embodiment according to an embodiment of this application. The communication apparatus 800 may be specifically the communication apparatus used as the terminal device in the foregoing embodiment, and the terminal device may be the transmit end or the receive end in the foregoing embodiment.

In a diagram of a possible logical structure of the communication apparatus 800, the communication apparatus 800 may include but is not limited to at least one processor 801 and a communication port 802.

The transceiver unit 601 shown in FIG. 6 may be a communication interface. The communication interface may be a communication port 802 in FIG. 8. The communication port 802 may include an input interface and an output interface. Alternatively, the communication port 802 may be a transceiver circuit, and the transceiver circuit may include an input interface circuit and an output interface circuit.

Further, optionally, the apparatus may further include at least one of a memory 803 and a bus. In this embodiment of this application, the at least one processor 801 is configured to control an action of the communication apparatus 800.

In addition, the processor 801 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 800 shown in FIG. 8 may be specifically configured to implement steps implemented by the transmit end or the receive end in the foregoing method embodiment, and implement technical effects corresponding to the transmit end or the receive end. For a specific implementation of the communication apparatus shown in FIG. 8, refer to descriptions in the foregoing method embodiment. Details are not described herein again.

FIG. 9 is a diagram of a structure of a communication apparatus 900 in the foregoing embodiment according to an embodiment of this application. The communication apparatus 900 may be specifically the communication apparatus used as the network device in the foregoing embodiment, and the network device may be the transmit end or the receive end in the foregoing embodiment. For a structure of the communication apparatus, refer to the structure shown in FIG. 9.

The communication apparatus 900 includes at least one processor 911 and at least one network interface 914. Further optionally, the communication apparatus further includes at least one memory 912, at least one transceiver 913, and one or more antennas 915. The processor 911, the memory 912, the transceiver 913, and the network interface 914 are connected, for example, by using a bus. In this embodiment of this application, the connection may include various interfaces, transmission lines, buses, or the like. This is not limited in this embodiment. The antennas 915 are connected to the transceiver 913. The network interface 914 is configured to enable the communication apparatus to communicate with another communication device by using a communication link. For example, the network interface 914 may include a network interface between the communication apparatus and a core network device, for example, an S1 interface. The network interface may include a network interface between the communication apparatus and another communication apparatus (for example, another network device or a core network device), for example, an X2 or Xn interface.

The transceiver unit 601 shown in FIG. 6 may be a communication interface. The communication interface may be a network interface 914 in FIG. 9. The network interface 914 may include an input interface and an output interface. Alternatively, the network interface 914 may be a transceiver circuit, and the transceiver circuit may include an input interface circuit and an output interface circuit.

The processor 911 is mainly configured to: process a communication protocol and communication data; control the entire communication apparatus, execute a software program, and process data of the software program. For example, the processor 911 is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire communication apparatus, execute the software program, and process the data of the software program. The processor 911 in FIG. 9 may integrate functions of the baseband processor and the central processing unit. A person skilled in the art may understand that the baseband processor and the central processing unit may alternatively be independent processors, and are interconnected by using a technology such as a bus. A person skilled in the art may understand that the communication apparatus may include a plurality of baseband processors to adapt to different network standards, the communication apparatus may include a plurality of central processing units to enhance a processing capability thereof, and components in the communication apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 912 may exist independently, and is connected to the processor 911. Optionally, the memory 912 may be integrated with the processor 911, for example, integrated into a chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual communication apparatus, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the communication apparatus and the terminal, and the transceiver 913 may be connected to the antennas 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 911, convert the modulated digital baseband signal or the digital intermediate frequency signal into a radio frequency signal, and send the radio frequency signal through the one or more antennas 915. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 913 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a transmitting function may be considered as a transmitting unit. That is, the transceiver unit includes the receiving unit and the transmitting unit. The receiving unit may also be referred to as a receiver, an input interface, a receiver circuit, or the like. The transmitting unit may be referred to as a transmitting device, a transmitter, a transmitter circuit, or the like.

It should be noted that the communication apparatus 900 shown in FIG. 9 may be specifically configured to implement steps implemented by the transmit end or the receive end in the foregoing method embodiment, and implement technical effects corresponding to the transmit end or the receive end. For a specific implementation of the communication apparatus 900 shown in FIG. 9, refer to descriptions in the foregoing method embodiment. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the transmit end or the receive end in the foregoing embodiment.

An embodiment of this application further provides a computer program product (or referred to as a computer program). When the computer program product is executed by a processor, the processor performs the method according to the possible implementations of the transmit end or the receive end.

An embodiment of this application further provides a chip system. The chip system includes at least one processor configured to support a communication apparatus to implement the functions in the foregoing possible implementations of the communication apparatus. Optionally, the chip system further includes an interface circuit, where the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the transmit end or the receive end in the foregoing method embodiment.

An embodiment of this application further provides a communication system. The communication system includes the transmit end and the receive end in any one of the foregoing embodiments.

In the several embodiments provided in this application, it should be understood that the disclosed system, apparatus, and method may be implemented in other manners. For example, the described apparatus embodiments are merely examples. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the communication apparatus is a chip used in a terminal, the chip in the terminal implements the functions of the terminal in the foregoing method embodiments. That the chip in the terminal receives information from a base station may be understood to mean that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending first information, wherein the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and
sending second information, wherein the second information comprises the DMRS, a first phase noise tracking reference signal PTRS, and the sensing signal, and the first PTRS is on an overlapping resource element.

2. A communication method, wherein the method comprises:
receiving first information, wherein the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource;
receiving second information, wherein the second information comprises the DMRS, a first phase noise tracking reference signal PTRS, and the sensing signal, and the first PTRS is on an overlapping resource element; and
determining the first PTRS signal and the sensing signal based on the first information and the second information.

3. The method according to claim 1 or 2, wherein the multiplexing relationship comprises a case that the sensing port belongs to the DMRS port.

4. The method according to claim 3, wherein a quantity of DMRS ports is greater than or equal to a quantity of sensing ports.

5. The method according to claim 1 or 2, wherein the multiplexing relationship comprises a case that some of the sensing ports belong to the DMRS port.

6. The method according to claim 5, wherein a quantity of DMRS ports is less than a quantity of sensing ports.

7. The method according to any one of claims 1 to 6, wherein the first information is a first value, and the first value indicates that a location of the first PTRS is a subcarrier on which a DMRS corresponding to a minimum index in the first resource element is located.

8. The method according to any one of claims 1 to 7, wherein the first information is a second value, the second value indicates that a location of the first PTRS is a subcarrier on which a DMRS corresponding to a minimum index in a third resource element is located, and the third resource element is a resource element other than the first resource element and the second resource element.

9. The method according to any one of claims 1 to 8, wherein the second information further comprises a second PTRS, and the second PTRS is on a fourth resource element.

10. The method according to any one of claims 1 to 9, wherein the sensing signal is related to a sensing sequence and a root coefficient.

11. The method according to claim 10, wherein the root coefficient is related to at least one of the following: a threshold of a peak to sidelobe level ratio PSLR, a detection distance range for sensing, a detection speed range for sensing, a sequence length of the sensing signal, and a quantity of resource elements REs allocated to the first PTRS signal.

12. The method according to claim 11, wherein the root coefficient satisfies the following formula: ${c}_{1} < \frac{{CT}_{s} {M}_{PTRS}}{2 D} ;$ and
*c*₁ represents the root coefficient, *C* represents a speed of light, *Tₛ* represents a sampling interval of the sensing signal, *M_{PTRS}* represents the quantity of REs, and *D* represents a value in the detection distance range.

13. The method according to claim 11 or 12, wherein the root coefficient has an association relationship with the quantity of REs, the root coefficient is related to the detection distance range, or the root coefficient is related to the quantity of REs and the detection distance range.

14. The method according to any one of claims 1 to 13, wherein energy of a signal carried by the overlapping resource element is greater than or equal to a first preset threshold.

15. The method according to any one of claims 1 to 14, wherein an index of the overlapping resource element is greater than or equal to a second preset threshold.

16. The method according to any one of claims 1 to 15, wherein the second information further comprises first data, and the first data comprises uplink data and/or downlink data.

17. A communication apparatus, wherein the communication apparatus comprises:
a transceiver unit, configured to send first information, wherein the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and
the transceiver unit is further configured to send second information, wherein the second information comprises the DMRS, a first phase noise tracking reference signal PTRS, and the sensing signal, and the first PTRS is on an overlapping resource element.

18. A communication apparatus, wherein the communication apparatus comprises:
a transceiver unit, configured to receive first information, wherein the first information indicates a multiplexing relationship between a demodulation reference signal DMRS port and a sensing port, the DMRS port is configured to indicate mapping of a symbol of a DMRS to a first resource element, the sensing port is configured to indicate mapping of a symbol of a sensing signal to a second resource element, and the first resource element and the second resource element overlap on a frequency domain resource; and
the transceiver unit is further configured to receive second information, wherein the second information comprises the DMRS, a first phase noise tracking reference signal PTRS, and the sensing signal, and the first PTRS is on an overlapping resource element; and
a processing unit, configured to determine the PTRS signal and the sensing signal based on the first information and the second information.

19. A communication apparatus, comprising a logic circuit and an input/output interface, wherein
the logic circuit and the input/output interface are configured to perform the method according to any one of claims 1 and 3 to 16.

20. A communication apparatus, comprising a logic circuit and an input/output interface, wherein
the logic circuit and the input/output interface are configured to perform the method according to any one of claims 2 to 16.

21. A communication apparatus, configured to implement the method according to any one of claims 1 and 3 to 16.

22. The communication apparatus according to claim 21, wherein the communication apparatus comprises a network device, a terminal device, or a chip.

23. A communication apparatus, configured to implement the method according to any one of claims 2 to 16.

24. The communication apparatus according to claim 23, wherein the communication apparatus comprises a terminal device, a network device, or a chip.

25. A communication system, comprising the communication apparatus according to claim 17 and the communication apparatus according to claim 18, comprising the communication apparatus according to claim 19 and the communication apparatus according to claim 20, comprising the communication apparatus according to claim 21 and the communication apparatus according to claim 23, or comprising the communication apparatus according to claim 22 and the communication apparatus according to claim 24.

26. A computer-readable storage medium, wherein the medium stores instructions, and when the instructions are run, the method according to any one of claims 1 to 16 is implemented.

27. A computer program product, comprising instructions, wherein when the instructions are run on a computer, the method according to any one of claims 1 to 16 is implemented.
